# EUROPEAN PATENT SPECIFICATION

(11) **EP 4 470 804 B1**
(45) Date of publication and mention of the grant of the patent: **04.02.2026**
(21) Application number: 23213724.0
(22) Date of filing: 01.12.2023
(51) Int. Cl.: B60G 11/08, B60G 11/10, B62D 17/00

(54) **CORNER MODULE APPARATUS FOR VEHICLE**
ECKMODULVORRICHTUNG FÜR EIN FAHRZEUG
APPAREIL DE MODULE D'ANGLE POUR VÉHICULE

(30) Priority: 31.05.2023 KR 20230070216; 31.05.2023 KR 20230070217
(43) Date of publication of application: 04.12.2024
(73) Proprietor: Hyundai Mobis Co., Ltd., Gangnam-gu Seoul 06141 (KR)
(72) Inventor: JEON, Jae Woong, 16891 Yongin-si, Gyeonggi-do (KR); JOO, Jin Wook, 16891 Yongin-si, Gyeonggi-do (KR)
(74) Representative: Frenkel, Matthias Alexander

(56) References cited:
- KR-A- 20190 041 855
- US-A- 2 123 089
- US-B2- 10 940 885

## Description

### BACKGROUND

### TECHNICAL FIELD

Exemplary embodiments of the present disclosure relate to a corner module apparatus for a vehicle, and more particularly, to a corner module apparatus for a vehicle, wherein driving, braking, steering, and suspension systems have been integrally constructed.

### DISCUSSION OF THE BACKGROUND

In general, an electric vehicle refers to an eco-friendly vehicle having no exhaust emissions. A high voltage battery that supplies energy for driving and a motor for driving, which generates rotatory power from power output by the high voltage battery, are mounted on the electric vehicle. The electric vehicle is driven as rotation power of the motor is transferred to wheels thereof through a driving shaft.

Recently, an in-wheel motor vehicle in which the motor is directly installed within the wheel so that power of the motor is directly transferred to the wheel by considering advantages in which the weight of the vehicle can be reduced and an energy loss in a power transmission process can be reduced because a power transmission device, that is, a middle stage such as a decelerator or a differential gear, can be omitted has been in the spotlight. Moreover, a four-wheel independent steering apparatus in which braking, steering, and suspension systems are integrally constructed in a driving system is also actively developed.

Such an independent steering apparatus is disadvantageous in its suspension package because a space within a wheel is narrowed compared to the existing steering apparatus and has a difficulty in driving according to an increase of the radius of rotation because an in-wheel motor is installed within the wheel.

The Background Art of the present disclosure was disclosed in Korean Patent Application Publication No. 10-2019-0041855 (published on April 23, 2019 and entitled "STEERING SYSTEM FOR IN-WHEEL MOTOR VEHICLE"). US 2 123 089 A discloses vehicle wheel suspensions, adjustable joints, and means for varying caster and camber angles of a vehicle wheel suspension. US 10 940 885 B2 discloses a steering knuckle of a vehicle turning wheel, a steering device and a vehicle. In the document the steering knuckle is described to include a steering end connected to a turning wheel and a driving end connected to a steering driving component of the turning wheel, in which the driving end is located above or below the side of the steering end, wherein the steering end is provided with a first connecting hole, and the driving end is provided with a second connecting hole, the axis of the second connecting hole and the axis of the first connecting hole are in the same plane, and the axis of the second connecting hole is not parallel to the axis of the first connecting hole.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

Various embodiments are directed to providing a corner module apparatus for a vehicle, which can independently adjust the camber angle of each wheel.

Various embodiments are directed to providing a corner module apparatus for a vehicle, which can simplify a fastening structure with a vehicle body.

In an embodiment, a corner module apparatus for a vehicle includes a driving unit configured to provide a wheel with driving power, a steering knuckle connected to the driving unit, a steering unit rotated along with the steering knuckle and configured to adjust a steering angle of the wheel, a first arm configured to support the steering unit with respect to a vehicle body, a leaf spring extended from the vehicle body and disposed to be spaced apart from the steering knuckle, a second arm configured to support the steering knuckle with respect to the leaf spring, relatively move with respect to the leaf spring, and adjust a camber angle of the wheel, and a restriction unit configured to selectively restrict the relative movement of the second arm for the leaf spring.

The second arm may include an arm body connected to the steering knuckle, a first extension part and a second extension part extended from the arm body in a direction parallel to the length direction of the leaf spring and disposed to face each other, and a slot disposed between the first extension part and the second extension part. The leaf spring may have an end inserted into the slot.

The length direction of the leaf spring may be disposed in parallel to the width direction of the vehicle body.

The restriction unit may include a guide hole formed to penetrate the first extension part and the second extension part, a guide pin extended from the leaf spring and inserted into the guide hole, and a pressurization member connected to the guide pin and configured to pressurize the first extension part and the second extension part toward the leaf spring or release the pressurization.

The width of the guide pin, which is parallel to the length direction of the leaf spring, may be smaller than the width of the guide hole, which is parallel to the length direction of the leaf spring.

The length direction of the guide pin may intersect the length direction of the leaf spring.

The pressurization member may include a first pressurization member connected to one side of the guide pin and disposed to face the first extension part, and a second pressurization member rotatably connected to the other side of the guide pin and disposed to face the second extension part. In this case, an interval between the second pressurization member and the first pressurization member is adjusted in a rotation direction of the second pressurization member.

### BRIEF DESCRIPTION OF THE DRAWINGS

FIG. 1 is a front view schematically illustrating the state in which a corner module apparatus for a vehicle according to a non-claimed example of the present disclosure has been installed.
FIG. 2 is a rear view schematically illustrating the state in which the corner module apparatus for a vehicle according to the non-claimed example of the present disclosure has been installed.
FIG. 3 is a perspective view schematically illustrating a construction of the corner module apparatus for a vehicle according to the non-claimed example of the present disclosure.
FIG. 4 is a front view schematically illustrating a construction of the corner module apparatus for a vehicle according to the non-claimed example of the present disclosure.
FIG. 5 is an exploded perspective view schematically illustrating a construction of the corner module apparatus for a vehicle according to the non-claimed example of the present disclosure.
FIG. 6 is an enlarged view schematically illustrating a construction of a steering unit according to the non-claimed example of the present disclosure.
FIG. 7 is a diagram schematically illustrating an internal structure of the steering unit according to the non-claimed example of the present disclosure.
FIG. 8 is a cross-sectional view schematically illustrating a construction of the steering unit according to the non-claimed example of the present disclosure.
FIG. 9 is an exploded perspective view schematically illustrating a construction of the steering unit according to the non-claimed example of the present disclosure.
FIG. 10 is a diagram schematically illustrating a suspension operation of the corner module apparatus for a vehicle according to the non-claimed example of the present disclosure.
FIG. 11 is a diagram schematically illustrating a steering operation of the corner module apparatus for a vehicle according to the non-claimed example of the present disclosure.
FIG. 12 is a perspective view schematically illustrating a construction of a corner module apparatus for a vehicle according to an embodiment of the present disclosure.
FIG. 13 is a front view schematically illustrating a construction of the corner module apparatus for a vehicle according to the embodiment of the present disclosure.
FIG. 14 is a perspective view schematically illustrating a construction of a second arm and a restriction unit according to the embodiment of the present disclosure.
FIG. 15 is a cross-sectional view schematically illustrating a construction of the second arm and the restriction unit according to the embodiment of the present disclosure.
FIG. 16 is an exploded perspective view schematically illustrating a construction of the second arm and the restriction unit according to the embodiment of the present disclosure.
FIG. 17 is a diagram schematically illustrating an operation of adjusting the camber angle of the corner module apparatus for a vehicle according to the embodiment of the present disclosure.

### DETAILED DESCRIPTION OF THE ILLUSTRATED EMBODIMENTS

The following detailed description is provided to assist the reader in gaining a comprehensive understanding of the methods, apparatuses, and/or systems described herein. For example, the sequences of operations described herein are merely examples, and are not limited to those set forth herein, but may be changed as will be apparent after an understanding of the disclosure of this application, with the exception of operations necessarily occurring in a certain order.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

Advantages and features of the present disclosure and methods of achieving the advantages and features will be clear with reference to embodiments described in detail below together with the accompanying drawings. However, the present disclosure is not limited to the embodiments disclosed herein but will be implemented in various forms. The embodiments of the present disclosure are provided so that the present disclosure is completely disclosed, and a person with ordinary skill in the art can fully understand the scope of the present disclosure. The present disclosure will be defined only by the scope of the appended claims. Meanwhile, the terms used in the present specification are for explaining the embodiments, not for limiting the present disclosure.

Terms, such as first, second, A, B, (a), (b) or the like, may be used herein to describe components. Each of these terminologies is not used to define an essence, order or sequence of a corresponding component but used merely to distinguish the corresponding component from other component(s). For example, a first component may be referred to as a second component, and similarly the second component may also be referred to as the first component.

Throughout the specification, when a component is described as being "connected to," or "coupled to" another component, it may be directly "connected to," or "coupled to" the other component, or there may be one or more other components intervening therebetween. In contrast, when an element is described as being "directly connected to," or "directly coupled to" another element, there can be no other elements intervening therebetween.

The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Hereinafter, a corner module apparatus for a vehicle according to embodiments of the present disclosure will be described with reference to the accompanying drawings.

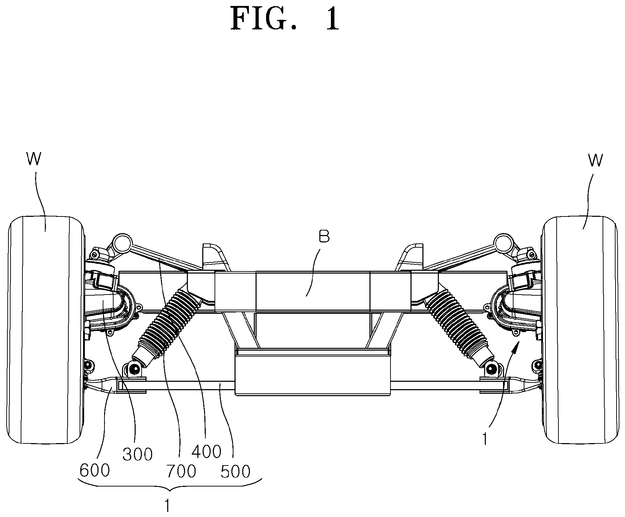

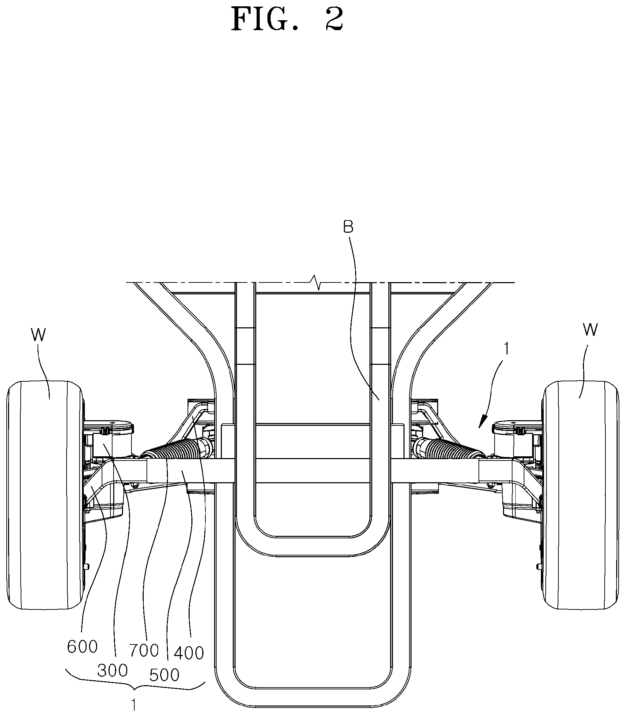

FIG. 1 is a front view schematically illustrating the state in which a corner module apparatus for a vehicle according to a non-claimed example of the present disclosure has been installed. FIG. 2 is a rear view schematically illustrating the state in which the corner module apparatus for a vehicle according to the non-claimed example of the present disclosure has been installed.

Referring to FIGS. 1 and 2, a corner module apparatus 1 for a vehicle according to the present non-claimed example is provided in a plural number, and may be individually installed between a wheel W and a vehicle body B. Each corner module apparatus 1 for a vehicle may function as a component for independently adjusting driving, braking, steering, and suspension operations of each wheel W by its own driving power.

The vehicle body B is a component that forms an overall frame or external appearance of a vehicle, and may be exemplified as a chassis frame, a body frame, a subframe, or an assembly of them. A detailed shape of the vehicle body B is not restricted to the shape illustrated in FIGS. 1 and 2, and may be designed and changed in various forms depending on the type of vehicle.

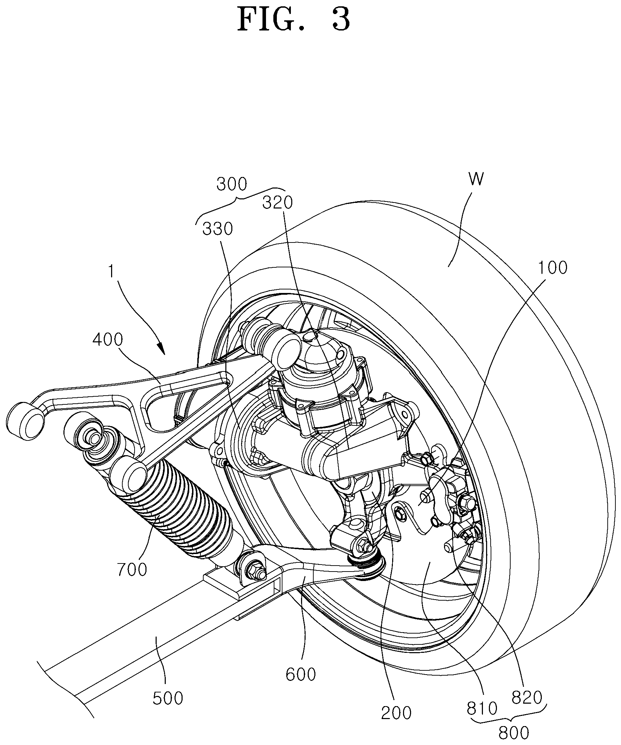

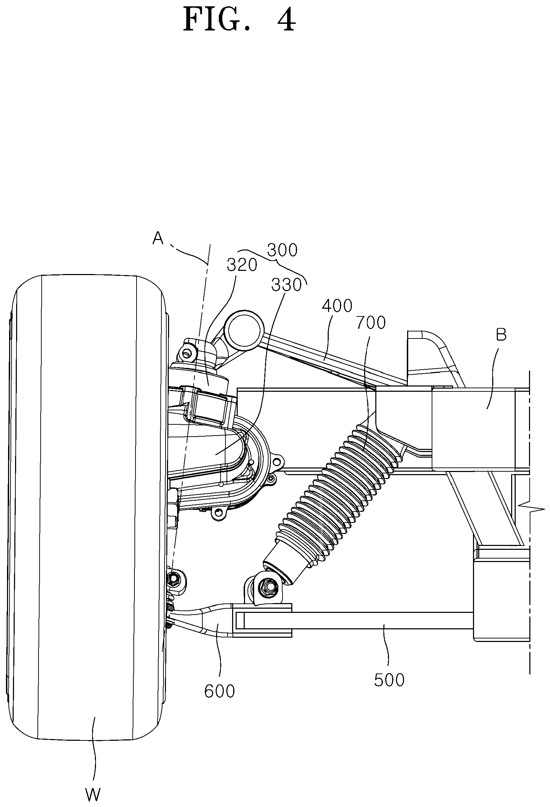

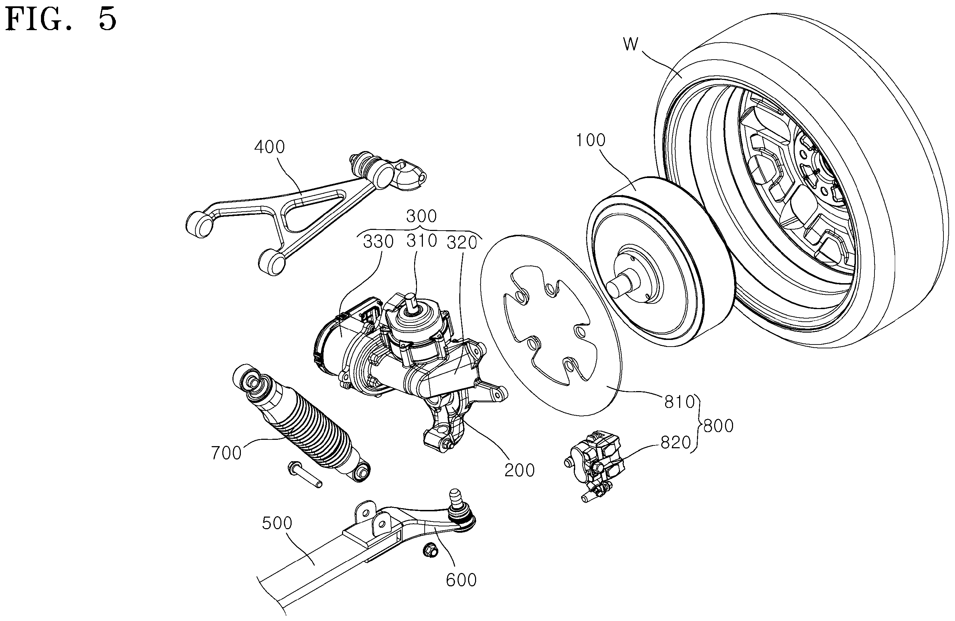

FIG. 3 is a perspective view schematically illustrating a construction of the corner module apparatus for a vehicle according to the non-claimed example of the present disclosure. FIG. 4 is a front view schematically illustrating a construction of the corner module apparatus for a vehicle according to the non-claimed example of the present disclosure. FIG. 5 is an exploded perspective view schematically illustrating a construction of the corner module apparatus for a vehicle according to the non-claimed example of the present disclosure.

Hereinafter, an example in which the length direction, width direction, and height direction of the vehicle body B are parallel to an X axis direction, a Y axis direction, and a Z axis direction, respectively, on the basis of FIGS. 1 to 4 is described.

Referring to FIGS. 1 to 5, the corner module apparatus 1 for a vehicle according to the present non-claimed example may include a driving unit 100, a steering knuckle 200, a steering unit 300, a first arm 400, a leaf spring 500, and a second arm 600.

The driving unit 100 is installed within the wheel W of a vehicle, and rotates the wheel W by providing driving power to the wheel W.

The driving unit 100 according to the present non-claimed example may be exemplified as various types of in-wheel motors each constructed to include a stator that is fixed within the wheel W and that forms a magnetic field by receiving power from the battery of a vehicle and a rotor that is rotatably installed within the wheel W and that rotates the wheel W by an electromagnetic interaction with the stator. The central axis of the stator and the rotor is placed on the same line as the central axis of the wheel W. The stator and the rotor may be disposed to be mutually stacked in a concentric circle within the wheel W.

The steering knuckle 200 is connected to the driving unit 100, and functions as a component for transferring steering torque that is generated by the steering unit 300 to the wheel W. The steering knuckle 200 may be fabricated by molding a metal-series material through casting in order to secure sufficient stiffness.

The steering knuckle 200 according to the present non-claimed example may be disposed to face the driving unit 100 in the width direction of the vehicle body B. The steering knuckle 200 may be combined with the stator of the driving unit 100 by welding or bolting. The steering knuckle 200 ca rotatably support the rotor of the driving unit 100 through the medium of a wheel bearing (not illustrated). A detailed shape of the steering knuckle 200 is not restricted to the shape illustrated in FIGS. 1 to 5.

The steering unit 300 is connected to the steering knuckle 200, and varies the steering angle of the wheel W by generating steering torque. More specifically, the steering unit 300 may vary the steering angle of the wheel W by rotating the steering knuckle 200 around a steering axis A clockwise or counterclockwise by steering torque that is generated by the driving power of the steering unit 300. In this case, the steering unit 300 may be rotated around the steering axis A along with the steering knuckle 200.

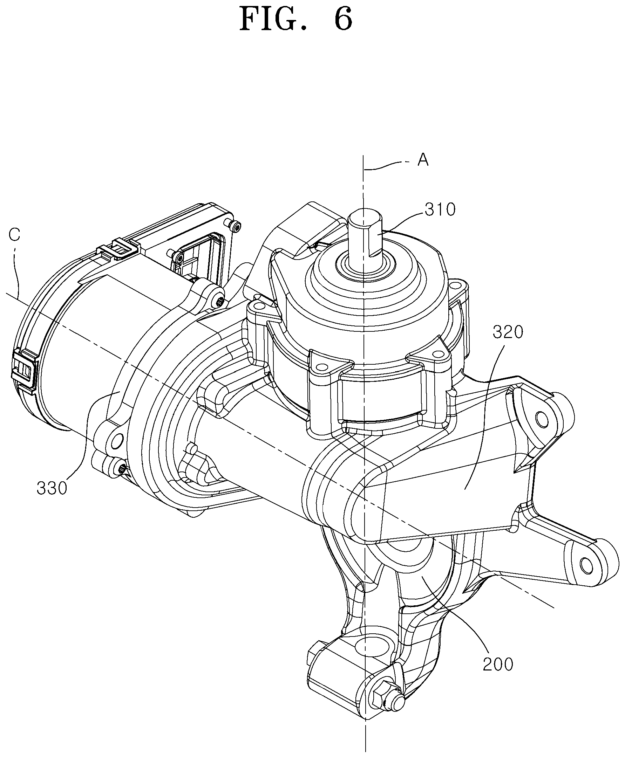

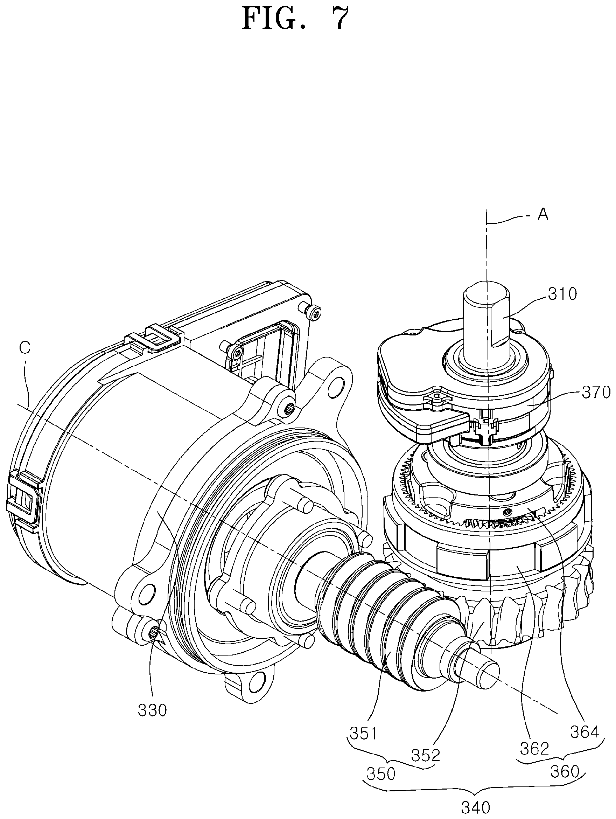

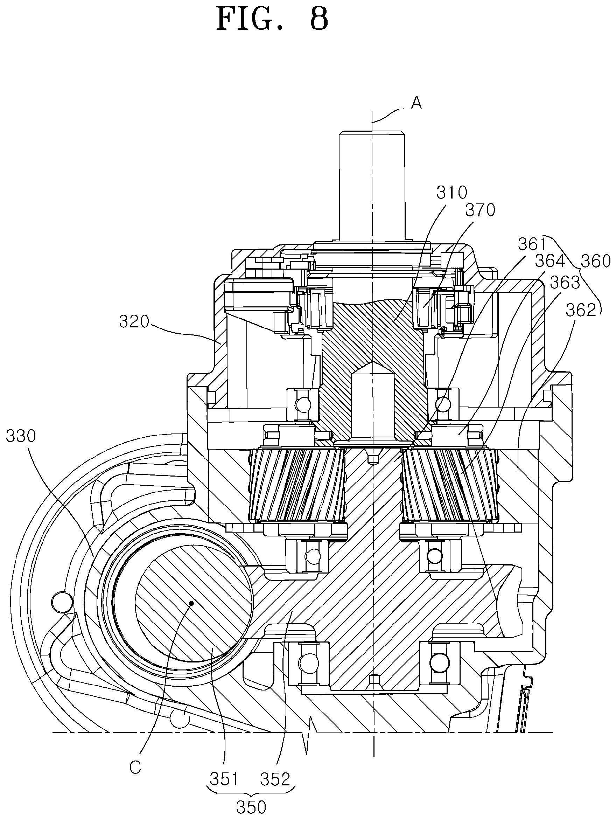

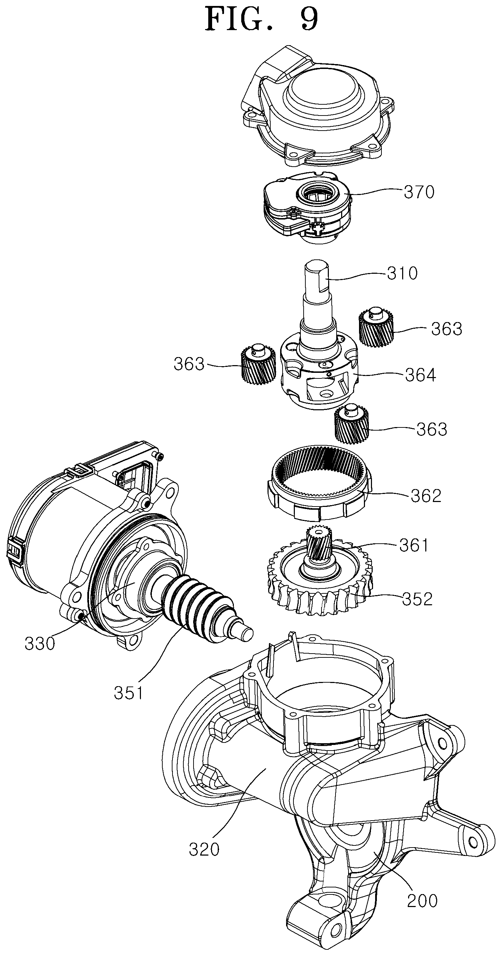

FIG. 6 is an enlarged view schematically illustrating a construction of the steering unit according to the non-claimed example of the present disclosure. FIG. 7 is a diagram schematically illustrating an internal structure of the steering unit according to the non-claimed example of the present disclosure. FIG. 8 is a cross-sectional view schematically illustrating a construction of the steering unit according to the non-claimed example of the present disclosure. FIG. 9 is an exploded perspective view schematically illustrating a construction of the steering unit according to the non-claimed example of the present disclosure.

Referring to FIGS. 6 to 9, the steering unit 300 according to the present non-claimed example may include a fixing shaft 310, a steering body 320, an actuator 330, and a power transmission member 340.

The fixing shaft 310 is fixed to the first arm 400, and functions as a fixing element that supports the rotation of the steering unit 300. That is, the fixing shaft 310 may function as a component that forms the steering axis A, that is, a central axis for steering.

The fixing shaft 310 according to the present non-claimed example may be formed to have a pole form having a predetermined length. The fixing shaft 310 may be disposed to have its central axis placed on the same axis as the steering axis A. In this case, the central axis of the fixing shaft 310, that is, the steering axis A, may be slantly disposed at a set angle to the ground. More specifically, as illustrated in FIG. 4, the bottom of the central axis of the fixing shaft 310 may be disposed toward the wheel W, and the top thereof may be disposed toward the vehicle body B. Accordingly, the fixing shaft 310 may generate a restoring force capable of restoring the steering knuckle 200 to its initial angle in a steering process of the wheel W.

The top of the fixing shaft 310 may be fixed to one end of the first arm 400 that is disposed to face the wheel W. In this case, the fixing shaft 310 may be fixed to the first arm 400 so that the fixing shaft 310 is not rotated around the central axis thereof. For example, the top of the fixing shaft 310 may be formed to have a polygonal cross section, and may be inserted and combined with the one end of the first arm 400. In contrast, the top of the fixing shaft 310 may be integrally combined with the one end of the first arm 400 by welding.

The steering body 320 extends from the steering knuckle 200, and rotatably supported by the fixing shaft 310. The steering body 320 according to the present non-claimed example extends from the steering knuckle 200, and may be formed to have a form of a housing that generally surrounds the fixing shaft 310. The steering body 320 may be molded integrally with the steering knuckle 200. Alternatively, the steering body 320 may be combined with the steering knuckle 200 by welding after being fabricated separately from the steering knuckle 200. The steering body 320 may have an internal surface rotatably supported by an external surface of the fixing shaft 310 through the medium of a bearing. The steering body 320 may be rotated around the fixing shaft 310 by the actuator 330 and the power transmission member 340. As the steering body 320 is integrally combined with the steering knuckle 200, when the steering body 320 is rotated, the steering knuckle 200 may be rotated around the fixing shaft 310 along with the steering body 320.

The actuator 330 is fixed to the steering body 320, and generates rotatory power. The actuator 330 according to the present non-claimed example may be exemplified as various types of electric motors that generate rotatory power by receiving a power source from the battery (not illustrated) of a vehicle. The actuator 330 may have one surface fixed to the steering body 320. In this case, the one surface of the actuator 330 may be integrally combined with the steering body 320 by welding or may be detachably combined with the steering body 320 by bolting. Accordingly, the actuator 330 can extend the steering range of the wheel W by more widely securing a space for steering between the wheel W and the vehicle body B, compared to a case in which the actuator 330 is combined with a separate structure that extends from the vehicle body B.

As the actuator 330 is integrally combined with the steering body 320, when the steering body 320 is rotated, the actuator 330 may be rotated along with the steering body 320, and may perform an orbit motion centering around the central axis of the fixing shaft 310.

A central axis C of the actuator 330 may be disposed to intersect the central axis of the fixing shaft 310, that is, the steering axis A. For example, as illustrated in FIG. 8, the central axis C of the actuator 330 may be disposed perpendicularly to the steering axis A. Accordingly, the actuator 330 ca reduce the volume of the steering unit 300 compared to a case in which the central axis C is placed on the same axis as the steering axis A, and can reduce a king pin offset value because the steering axis A is disposed close to the wheel W.

The power transmission member 340 is provided between the actuator 330 and the steering body 320, and rotates the steering body 320 around the fixing shaft 310 while operating in conjunction with rotatory power that is generated by the actuator 330. That is, the power transmission member 340 may function as a component that transfers rotatory power generated by the actuator 330 to the steering body 320 and the steering knuckle 200.

The power transmission member 340 according to the present non-claimed example may include a first power transmission member 350 and a second power transmission member 360.

The first power transmission member 350 is rotated by rotatory power transferred by the actuator 330. The first power transmission member 350 functions as a component that permits rotatory power generated by the actuator 330 to be transferred to the second power transmission member 360 and that blocks rotatory power received from the steering body 320 from being transferred to the actuator 330 through the second power transmission member 360. Accordingly, the first power transmission member 350 can prevent the steering angle of the wheel W from being arbitrarily changed due to an external force that is inversely received from a road surface contrary to a driver's intention.

The first power transmission member 350 according to the present non-claimed example may include a worm gear 351 and a worm wheel 352.

The worm gear 351 may be formed to have various types of worm gears in each of which worm screw threads have been formed in its outer circumference. The worm gear 351 may be disposed within the steering body 320, and may have one end connected to an output shaft (not illustrated) of the actuator 330. The worm gear 351 may have its central axis placed on the same axis as the central axis C of the actuator 330. When the actuator 330 operates, the worm gear 351 may be rotated around the central axis clockwise or counterclockwise by rotatory power that is generated by the actuator 330.

The worm wheel 352 may be formed to have various forms of worm wheels in each of which gear teeth are formed in its outer circumference, and may be engaged and combined with the worm gear 351. The worm wheel 352 may be disposed within the steering body 320, and may have a central axis placed on the same axis as the central axis of the fixing shaft 310, that is, the steering axis A. In this case, the central axis of the worm wheel 352 may be disposed perpendicularly to the central axis of the worm gear 351. The worm wheel 352 may be rotated around the central axis clockwise or counterclockwise by the rotation of the worm gear 351. The worm wheel 352 is connected to the second power transmission member 360 and rotated around its central axis, and may transfer rotatory power generated by the actuator 330 to the second power transmission member 360. The worm gear 351 may not be rotated by the rotation of the worm wheel 352 due to its lead angle and a friction force with the worm wheel 352. Accordingly, rotatory power that acts between the actuator 330 and the steering body 320 may be transferred only in a direction from the actuator 330 to the steering body 320.

The second power transmission member 360 is connected to the first power transmission member 350, and transfers rotatory power of the first power transmission member 350 to the steering body 320.

The second power transmission member 360 according to the present non-claimed example may include a sun gear 361, a ring gear 362, planetary gears 363, and a carrier 364.

The sun gear 361 is rotated by rotatory power transferred by the first power transmission member 350. The sun gear 361 according to the present non-claimed example may be exemplified as various types of cylindrical gears in each of which gear teeth have been formed in an outer circumference thereof. The sun gear 361 may be disposed within the steering body 320, and may be disposed to have its central axis placed on the same axis as the central axis of the fixing shaft 310, that is, the steering axis A. The sun gear 361 may be integrally connected to the worm wheel 352. Accordingly, when the worm wheel 352 is rotated, the sun gear 361 may be rotated around the central axis thereof clockwise or counterclockwise at the same angular speed as the worm wheel 352.

The ring gear 362 is disposed to be spaced apart from the sun gear 361, and is combined with the steering body 320. The ring gear 362 according to the present non-claimed example may have a form of a ring in which gear teeth have been formed in an inner circumferential surface thereof. An internal diameter of the ring gear 362 may be formed to be greater than an external diameter of the sun gear 361. The ring gear 362 may have a central axis placed on the same axis as the central axis of the fixing shaft 310, that is, the steering axis A. The ring gear 362 may be disposed so that an inner circumferential surface of the ring gear 362 is spaced apart from the outer circumference of the sun gear 361 at a predetermined interval and disposed to face the outer circumference of the sun gear 361. That is, the ring gear 362 may be disposed to form a concentric circle along with the sun gear 361. The outer circumference of the ring gear 362 may be integrally combined with the internal surface of the steering body 320. In this case, the ring gear 362 may be integrally combined with the internal surface of the steering body 320 by various types of coupling methods, such as press-fitting and welding. Accordingly, when the ring gear 362 is rotated, the steering body 320 and the steering knuckle 200 may be rotated around the steering axis A along with the ring gear 362.

The planetary gear 363 may have various forms of cylindrical gears in each of which gear teeth have been formed in an outer circumference thereof, and may be disposed between the sun gear 361 and the ring gear 362. The planetary gear 363 may have a central axis placed in parallel to the central axis of the sun gear 361 and the ring gear 362. The planetary gear 363 may have an outer circumference engaged and combined with the outer circumference of the sun gear 361 and the inner circumferential surface of the ring gear 362. In FIG. 9, an example in which the number of planetary gears 363 is 3 has been taken. However, the number of planetary gears 363 is not restricted to 3, and may be designed and changed in various ways, for example, 1, 2, and 4.

The planetary gear 363 may be supported by the carrier 364 in a way to be rotatable around a central axis thereof. When the sun gear 361 is rotated, the planetary gear 363 may perform a rotatory motion centering around the central axis thereof. The planetary gear 363 may not perform an orbit motion centering around the central axis of the sun gear 361 because the carrier 364 is fixed to the fixing shaft 310 as described above when the sun gear 361 is rotated. As described above, as the planetary gear 363 performs only the rotatory motion by the rotation of the sun gear 361, the ring gear 362 is rotated around the central axis thereof by the planetary gear 363, and can rotate the steering body 320 and the steering knuckle 200.

The carrier 364 is connected to the planetary gear 363 and fixed to the fixing shaft 310. The carrier 364 according to the present non-claimed example may be formed to have a form of a barrel the inside of which is empty. The planetary gear 363 may be accommodated within the carrier 364. The planetary gear 363 may be supported by the carrier 364 in a way to be rotatable around the central axis thereof through the medium of a separate rotation shaft. The carrier 364 may have a central axis placed on the same axis as the central axis of the fixing shaft 310. The top of the carrier 364 may be integrally fixed to the bottom of the fixing shaft 310. As the fixing shaft 310 is installed to be not rotatable around the central axis thereof, the carrier 364 may also not be rotated around the central axis thereof when the planetary gear 363 is rotated.

The steering unit 300 according to the present non-claimed example may further include a steering angle sensor 370.

The steering angle sensor 370 is installed between the fixing shaft 310 and the steering body 320, and may be exemplified as various types of detection means capable of detecting the angle at which the steering body 320 is rotated with respect to the fixing shaft 310.

The first arm 400 supports the steering unit 300 with respect to the vehicle body B. More specifically, the first arm 400 plays a role of absorbing a load that is applied by the wheel W and adjusting a movement of the wheel W while the vehicle travels by connecting the wheel W to the vehicle body B through the medium of the steering unit 300 and also by its own stiffness. The first arm 400 according to the present non-claimed example may be formed to have approximately a form of wishbone arm. The first arm 400 may have one end rotatably connected to the vehicle body B by a bush or a ball joint. The other end of the first arm 400 may be connected to the top of the fixing shaft 310. In this case, the other end of the first arm 400 may be directly connected to the top of the fixing shaft 310, and may be connected to the top of the fixing shaft 310 by a separate joint as illustrated in FIGS. 3 and 5. The first arm 400 may be connected to the top of the fixing shaft 310 so that the fixing shaft 310 is not rotated around the central axis thereof.

The leaf spring 500 extends from the vehicle body B, and is disposed to be spaced apart from the steering knuckle 200. The leaf spring 500 according to the present non-claimed example may be formed to have various forms of plate springs which may be elastically deformed. The leaf spring 500 may have a length direction disposed in parallel to the width direction of the vehicle body. Both ends of the leaf spring 500 protrude to both sides of the vehicle body B, and may be disposed to face a pair of steering knuckles 200 that are installed in a pair of wheels W, respectively, which are spaced apart from each other in the width direction of the vehicle body B.

A central part of the leaf spring 500 may be fixed to the vehicle body B. In this case, the central part of the leaf spring 500 may be detachably fixed to the vehicle body B by bolting, and may be integrally fixed to the vehicle body B by welding. The end of the leaf spring 500 may be fixed to the second arm 600. The leaf spring 500 may offset an impact that is applied from a road surface while being elastically deformed up and down upon bump or rebound motion of the wheel W.

The second arm 600 is disposed to be spaced apart from the first arm 400, and supports the steering knuckle 200 with respect to the leaf spring 500. The second arm 600 according to the present non-claimed example may be formed to have various forms of suspension arms. One end of the second arm 600 may be rotatably connected to the lower side of the steering knuckle 200 by a bush or a ball joint. The other end of the second arm 600 may be connected to the end of the leaf spring 500. For example, the end of the leaf spring 500 may be inserted into the other end of the second arm 600, and may be fixed to the other end of the second arm 600 by welding or bolting. Accordingly, the second arm 600 can simplify an assembly structure with the vehicle body B and reduce the number of parts and processes by being indirectly connected to the vehicle body B through the medium of the leaf spring 500.

The corner module apparatus 1 for a vehicle according to the present non-claimed example may further include a damper 700 and a braking unit 800.

The damper 700 has both sides connected to the second arm 600 and the vehicle body B, respectively, and is elastically provided in a length direction thereof. Upon bump or rebound motion of the wheel W, the damper 700 is extended or contracted in the length direction thereof, and can absorb an impact that is applied from a road surface. The damper 700 according to the present non-claimed example may be exemplified as various types of buffering means each including a cylinder in which a damping fluid is filled and that has a bottom rotatably connected to an upper side of the second arm 600 and a damping rod that is slidably inserted into the cylinder and that has a top combined with the vehicle body B. The damper 700 may be elastically disposed in a direction that is inclined with respect to the length direction of the leaf spring 500, that is, the width direction of the vehicle body B. For example, a distance between the top of the damper 700 and the wheel W may be greater than a distance between the bottom of the damper 700 and the wheel W.

The braking unit 800 is provided between the driving unit 100 and the steering knuckle 200, and applies a braking force to a vehicle or releases the braking force by interference with the rotation of the wheel W.

The braking unit 800 according to the present non-claimed example may include a brake disk 810 and a brake caliper 820.

The brake disk 810 is connected to the wheel W or the driving unit 100, and is rotated while operating in conjunction with the rotation of the wheel W. The brake disk 810 according to the present non-claimed example may be formed to have a disk shape and disposed within the wheel W. The brake disk 810 may be disposed so that a central axis of the brake disk 810 is placed on the same line as the central axis of the wheel W. The brake disk 810 may be integrally connected to the wheel W or the rotor of the driving unit 100 by bolting. Accordingly, when the wheel W is rotated, the brake disk 810 may be rotated around the central axis thereof along with the wheel W. The diameter of the brake disk 810 may be variously designed and changed depending on the diameter of the wheel W or the size of the driving unit 100.

The brake caliper 820 applies a braking force by pressurizing the brake disk 810 when a vehicle brakes. The brake caliper 820 according to the present non-claimed example may be constructed to include a brake pad that is disposed to face the brake disk 810, a caliper housing that is combined with the steering knuckle 200 and that supports the brake pad in a way to be movable, and a piston that is installed in the caliper housing in a way to be movable forward and backward and that pressurizes the brake pad toward the brake disk 810 or releases the pressurization in the moving direction thereof.

Hereinafter, an operation of the corner module apparatus 1 for a vehicle according to the non-claimed example of the present disclosure is described.

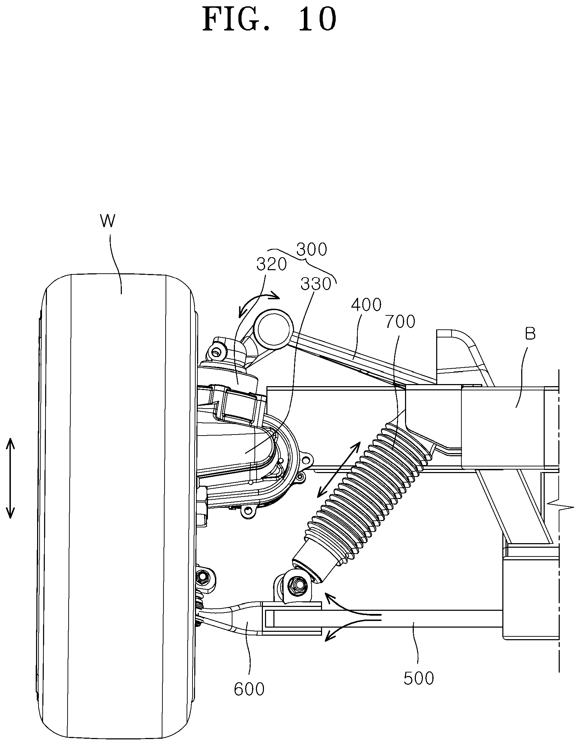

FIG. 10 is a diagram schematically illustrating a suspension operation of the corner module apparatus for a vehicle according to the non-claimed example of the present disclosure.

Referring to FIG. 10, in a driving process of a vehicle, the wheel W passes a bump in a road surface, the wheel W performs a bump or rebound operation while moving up and down.

When the wheel W is moved up and down, an installation angle of the first arm 400 that has one end connected to the steering unit 300 is adjusted with respect to the vehicle body B, and the first arm 400 provides guidance to a movement of the wheel W.

Furthermore, when the second arm 600 that has one end connected to the steering knuckle 200 is moved up and down along with the wheel W, the damper 700 is extended or contracted in the length direction thereof, and the leaf spring 500 is elastically deformed up and down and adds buffering power in a direction opposite to the movement direction of the wheel W.

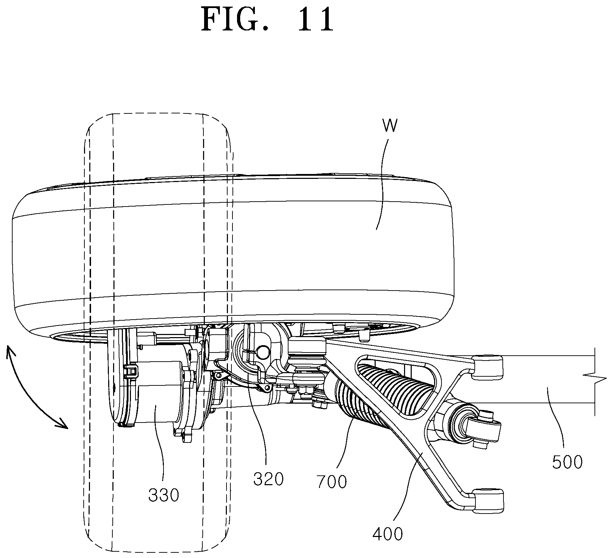

FIG. 11 is a diagram schematically illustrating a steering operation of the corner module apparatus for a vehicle according to the non-claimed example of the present disclosure.

Referring to FIGS. 6 to 9 and 11, when the vehicle is steered, the actuator 330 generates rotatory power in one direction.

The rotatory power generated by the actuator 330 is transferred to the worm gear 351. The worm gear 351 is rotated around the central axis C of the actuator 330.

The worm wheel 352 that has been engaged with the worm gear 351 is rotated around the steering axis A by the rotation of the worm gear 351.

When the worm wheel 352 is rotated, the sun gear 361 is rotated at the same angular speed as the worm wheel 352. The planetary gear 363 that has been engaged with the sun gear 361 performs a rotatory motion centering around the central axis thereof.

As the carrier 364 is fixed to the fixing shaft 310, the planetary gear 363 performs only a rotatory motion without performing an orbit motion.

The ring gear 362 having the inner circumferential surface engaged with the planetary gear 363 is rotated around the steering axis A by the rotatory motion of the planetary gear 363.

Thereafter, the steering body 320 and the steering knuckle 200 that have been integrally connected to the ring gear 362 are relatively rotated around the steering axis A with respect to the fixing shaft 310, and vary the steering angle of the wheel W.

Hereinafter, a corner module apparatus 2 for a vehicle according to an embodiment of the present disclosure is described.

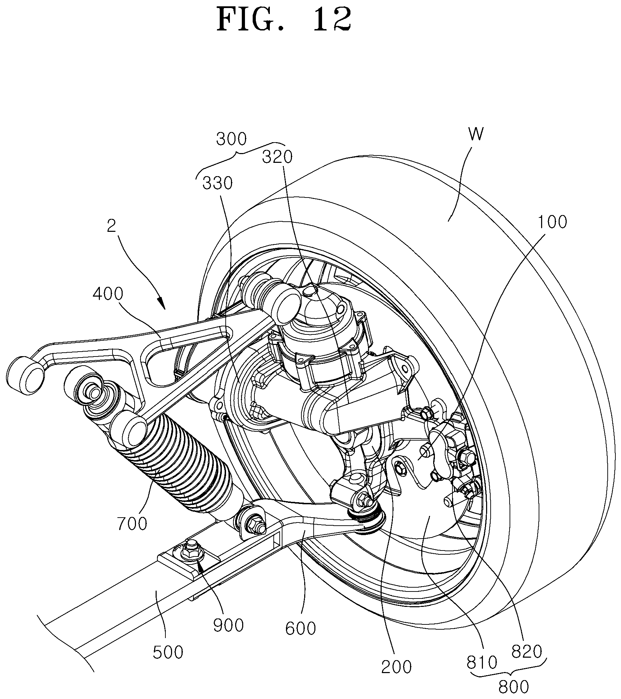

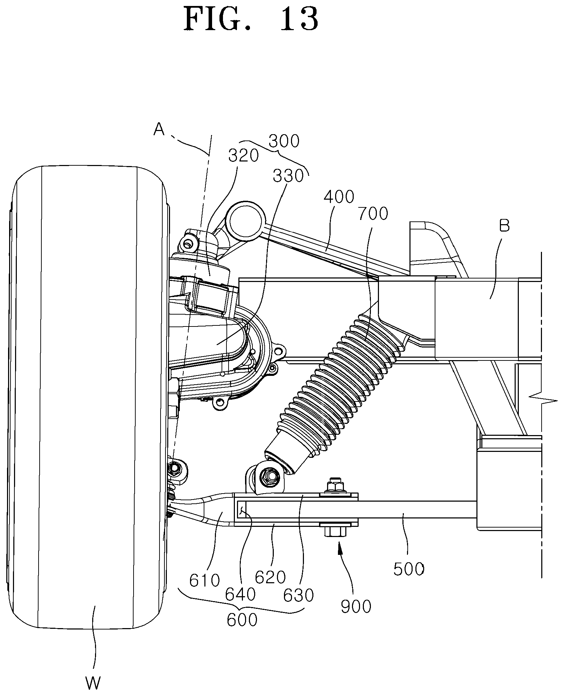

FIG. 12 is a perspective view schematically illustrating a construction of a corner module apparatus for a vehicle according to an embodiment of the present disclosure. FIG. 13 is a front view schematically illustrating a construction of the corner module apparatus for a vehicle according to the embodiment of the present disclosure.

Referring to FIGS. 12 and 13, the corner module apparatus 2 for a vehicle according to the present embodiment may include a driving unit 100, a steering knuckle 200, a steering unit 300, a first arm 400, a leaf spring 500, a second arm 600, a damper 700, a braking unit 800, and a restriction unit 900.

The corner module apparatus 2 for a vehicle according to the present embodiment may be constructed to include only detailed components of the second arm 600 and the restriction unit 900, which are different from those of the corner module apparatus 1 for a vehicle according to the non-claimed example of the present disclosure. Accordingly, in describing the construction of the corner module apparatus 2 for a vehicle according to the present embodiment, only the detailed components of the second arm 600 and the restriction unit 900, which are different from those of the corner module apparatus 1 for a vehicle according to the non-claimed example of the present disclosure, will be described. The description of the corner module apparatus 1 for a vehicle according to the non-claimed example of the present disclosure may be applied to the remaining components of the corner module apparatus 2 for a vehicle according to the present embodiment without any change.

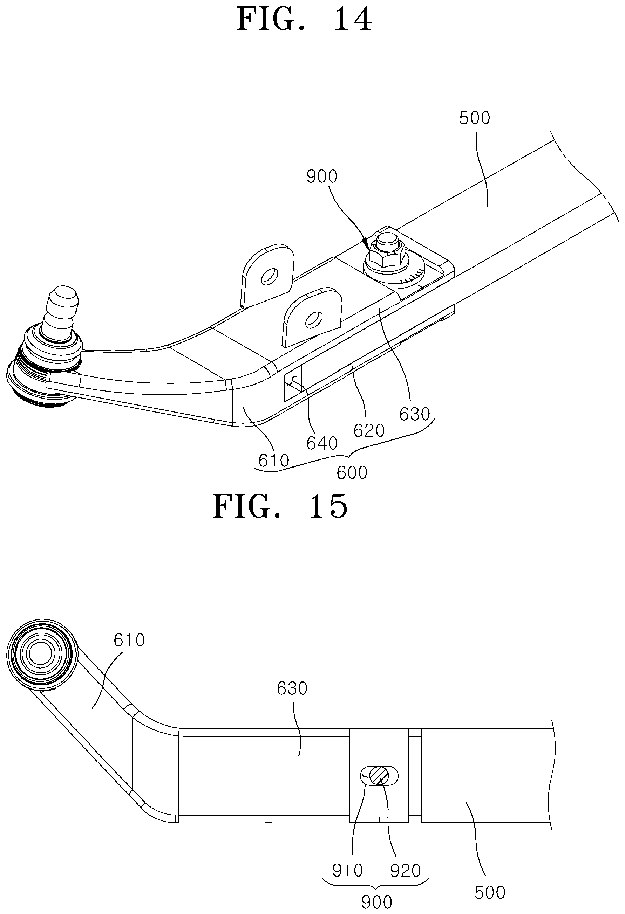

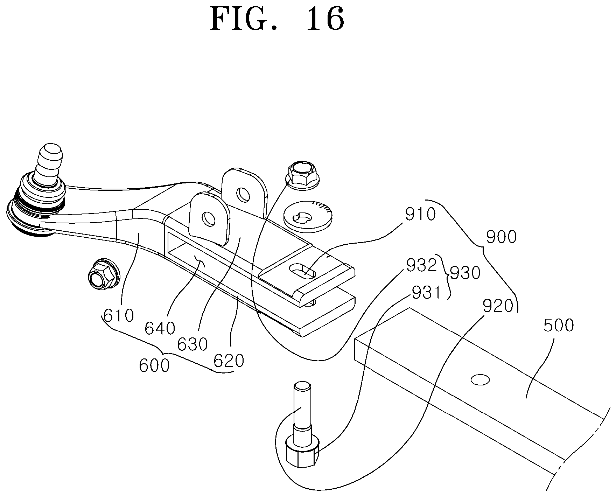

FIG. 14 is a perspective view schematically illustrating a construction of the second arm and the restriction unit according to the embodiment of the present disclosure. FIG. 15 is a cross-sectional view schematically illustrating a construction of the second arm and the restriction unit according to the embodiment of the present disclosure. FIG. 16 is an exploded perspective view schematically illustrating a construction of the second arm and the restriction unit according to the embodiment of the present disclosure.

Referring to FIGS. 12 to 16, the second arm 600 according to the present embodiment may be installed to be relatively moved with respect to the leaf spring 500. The second arm 600 is relatively moved with respect to the leaf spring 500, and may adjust the camber angle of the wheel W.

The second arm 600 according to the present embodiment may include an arm body 610, a first extension part 620, a second extension part 630, and a slot 640.

The arm body 610 forms an external appearance of the second arm 600 on one side thereof, and is connected to the steering knuckle 200. The arm body 610 according to the present embodiment may be disposed between the steering knuckle 200 and the end of the leaf spring 500. The arm body 610 may have one end rotatably connected to the steering knuckle 200 through the medium of a ball joint or a bush.

The first extension part 620 and the second extension part 630 extend from the arm body 610, and form an external appearance of the second arm 600 on the other side thereof. The first extension part 620 and the second extension part 630 according to the present embodiment may be formed to have a form of a plate that extends in a direction parallel to the length direction of the leaf spring 500 from the other end of the arm body 610. The first extension part 620 and the second extension part 630 may be disposed so that internal surfaces of the first extension part 620 and the second extension part 630 face each other in a direction that intersects the length direction of the leaf spring 500, for example, the height direction of the vehicle body B as illustrated in FIG. 13.

The slot 640 may be exemplified as an empty space that is disposed between the first extension part 620 and the second extension part 630. The end of the leaf spring 500 may be inserted into the slot 640. In this case, the internal surfaces of the first extension part 620 and the second extension part 630 may be spaced apart from the bottom and top of the leaf spring 500, respectively, or may come into contact with the bottom and top of the leaf spring 500 in a way to slidably move. Accordingly, the second arm 600 reciprocates in the length direction of the leaf spring 500, that is, the width direction of the vehicle body B, and may adjust the camber angle of the wheel W.

The restriction unit 900 selectively restricts a relative movement of the second arm 600 for the leaf spring 500. That is, the restriction unit 900 may function as a component that restricts or permits a movement of the second arm 600 by a manipulation of a user. Accordingly, the restriction unit 900 can prevent the camber angle of the wheel W from being arbitrarily changed in a driving process of a vehicle.

The restriction unit 900 according to the present embodiment may include a guide hole 910, a guide pin 920, and a pressurization member 930.

The guide hole 910 is provided in the second arm 600, and provides guidance to a movement of the second arm 600 for the leaf spring 500. The guide hole 910 according to the present embodiment may be provided as a pair. The pair of guide holes 910 may perpendicularly penetrate the first extension part 620 and the second extension part 630 in the height direction of the vehicle body B. The pair of guide holes 910 may be disposed so that the central axis of the pair of guide holes 910 is placed on the same axial line. Each of the guide holes 910 may be formed to have an oval cross section so that the width of the guide hole 910, which his parallel to the length direction of the leaf spring 500, is greater than the width of the guide hole 910, which is perpendicular to the length direction of the leaf spring 500.

The guide pin 920 extends from the leaf spring 500, and is inserted into the guide hole 910. The guide pin 920 according to the present embodiment is formed to have a pole form, and may be disposed so that the length direction of the guide pin 920 intersects the length direction of the leaf spring 500. Both ends of the guide pin 920 may extend from the leaf spring 500 to the first extension part 620 and the second extension part 630, respectively, and may be individually inserted into the pair of guide holes 910.

The width of the guide pin 920, which is parallel to the length direction of the leaf spring 500, may be smaller than the width of the guide hole 910, which is parallel to the length direction of the leaf spring 500. Accordingly, the second arm 600 may freely reciprocate within the range of the width of the guide hole 910, which is parallel to the length direction of the leaf spring 500.

The guide pin 920 may be fabricated separately from the leaf spring 500 as illustrated in FIG. 16. The guide pin 920 may be inserted into the leaf spring 500 so that the top of the guide pin 920 penetrates the leaf spring 500 up and down through the guide hole 910 in the state in which the leaf spring 500 has been inserted into the slot 640. In contrast, the guide pin 920 may be integrally combined with the leaf spring 500 by welding. A screw thread may be formed in an outer circumference of the guide pin 920 at the top thereof.

The pressurization member 930 is connected to the guide pin 920, and pressurizes the first extension part 620 and the second extension part 630 toward the leaf spring 500 or releases the pressurization by a manipulation of a user. That is, the pressurization member 930 may function as a component that restricts or permits a movement of the second arm 600 for the leaf spring 500 by adjusting the size of a friction force that acts between the leaf spring 500, and the first extension part 620 and the second extension part 630.

The pressurization member 930 according to the present embodiment may include a first pressurization member 931 and a second pressurization member 932.

The first pressurization member 931 is connected to one side of the guide pin 920 and disposed to face the first extension part 620. The first pressurization member 931 according to the present embodiment may be formed to have a form, such as a plate or a bolt head that extends in the radial direction of the guide pin 920. The first pressurization member 931 may be disposed at the bottom of the guide pin 920 that protrudes from the guide hole 910 formed in the first extension part 620. An internal surface of the first pressurization member 931 may be disposed to face an external surface of the first extension part 620. The internal surface of the first pressurization member 931 may pressurize the first extension part 620 toward the leaf spring 500 or release the pressurization by an operation of the second pressurization member 932. A washer may be additionally installed between the internal surface of the first pressurization member 931 and the external surface of the first extension part 620.

The second pressurization member 932 is rotatably connected to the other side of the guide pin 920 and disposed to face the second extension part 630. The second pressurization member 932 reciprocates in the length direction of the guide pin 920 in a rotation direction thereof, so that an interval between the second pressurization member 932 and the first pressurization member 931 may be adjusted. The second pressurization member 932 according to the present embodiment may have a form of a nut having a hollow form, in which a screw thread is formed in an inner circumferential surface thereof. The second pressurization member 932 may be screwed onto the top of the guide pin 920 that protrudes from the guide hole 910 formed in the second extension part 630. An internal surface of the second pressurization member 932 may be disposed to face an external surface of the second extension part 630. The second pressurization member 932 may be rotated around the central axis of the guide pin 920 clockwise or counterclockwise, and may reciprocate in the length direction of the guide pin 920. The internal surface of the second pressurization member 932 may pressurize the second extension part 630 toward the leaf spring 500 or release the pressurization in a movement direction of the second pressurization member 932. A washer may be additionally installed between the internal surface of the second pressurization member 932 and the external surface of the second extension part 630.

Hereinafter, an operation of the corner module apparatus 2 for a vehicle according to the embodiment of the present disclosure is described.

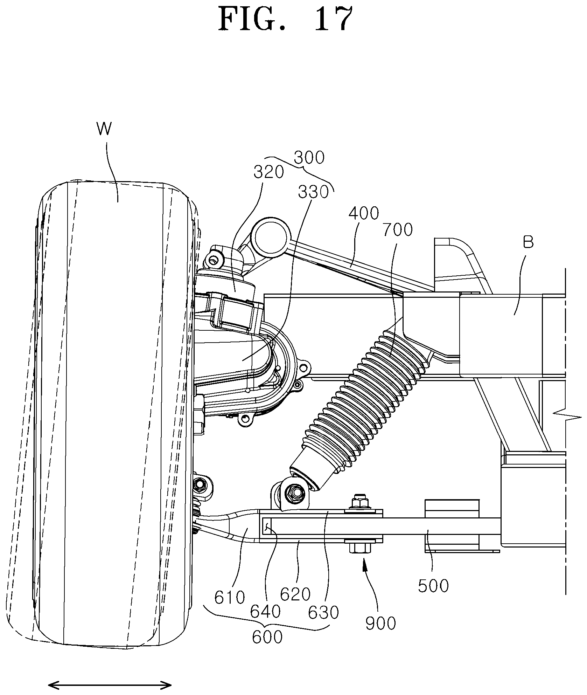

FIG. 17 is a diagram schematically illustrating an operation of adjusting the camber angle of the corner module apparatus for a vehicle according to the embodiment of the present disclosure.

Referring to FIGS. 12 to 17, if the camber angle of the wheel W needs to be adjusted, a user increases an interval between the first pressurization member 931 and the second pressurization member 932 by rotating the second pressurization member 932 in one direction.

As the interval between the first pressurization member 931 and the second pressurization member 932 is increased, the internal surfaces of the first pressurization member 931 and the second pressurization member 932 are spaced apart from the external surfaces of the first extension part 620 and the second extension part 630, respectively.

Accordingly, the pressing forces of the first pressurization member 931 and the second pressurization member 932, which are applied to the first extension part 620 and the second extension part 630, are released. The state of the second arm 600 is changed into the state in which the second arm 600 can freely relatively move with respect to the leaf spring 500.

Thereafter, the user moves the second arm 600 in a direction parallel to the length direction of the leaf spring 500.

When the second arm 600 is moved, the bottom of the wheel W move in a direction parallel to the width direction of the vehicle body B, so that the camber angle of the wheel W is adjusted.

After the adjustment of the camber angle of the wheel W is completed, the user reduces the interval between the first pressurization member 931 and the second pressurization member 932 by rotating the second pressurization member 932 in a direction opposite to the direction in which the second pressurization member 932 has been rotated.

As the interval between the first pressurization member 931 and the second pressurization member 932 is reduced, the internal surfaces of the first pressurization member 931 and the second pressurization member 932 pressurize the first extension part 620 and the second extension part 630 toward the leaf spring 500, respectively.

By pressing forces that are applied by the first pressurization member 931 and the second pressurization member 932, the first extension part 620 and the second extension part 630 are closely attached to the external surface of the leaf spring 500, and the size of a friction force that acts between the first extension part 620 and the second extension part 630 is increased.

The state of the second arm 600 is changed into the state in which a relative movement of the second arm 600 for the leaf spring 500 is restricted when the size of the friction force that acts between the first extension part 620 and the second extension part 630 is increased to a set size or more.

## Claims

1. A corner module apparatus for a vehicle, comprising:
a driving unit (100) configured to provide a wheel (W) with driving power;
a steering knuckle (200) connected to the driving unit (100);
a steering unit (300) rotated along with the steering knuckle (200) and configured to adjust a steering angle of the wheel (W);
a first arm (400) configured to support the steering unit (300) with respect to a vehicle body (B);
a leaf spring (500) extended from the vehicle body (B) and disposed to be spaced apart from the steering knuckle (200);
a second arm (600) configured to support the steering knuckle (200) with respect to the leaf spring (500), relatively move with respect to the leaf spring (500), and adjust a camber angle of the wheel (W); and
a restriction unit (900) configured to selectively restrict the relative movement of the second arm (600) for the leaf spring (500).

2. The corner module apparatus for the vehicle of claim 1, wherein the second arm (600) comprises:
an arm body (610) connected to the steering knuckle (200);
a first extension part (620) and a second extension part (630) extended from the arm body (610) in a direction parallel to a length direction of the leaf spring (500) and disposed to face each other; and
a slot (640) disposed between the first extension part (620) and the second extension part (630),
wherein the leaf spring (500) has an end inserted into the slot (640).

3. The corner module apparatus for the vehicle of claim 2, wherein the length direction of the leaf spring (500) is disposed in parallel to a width direction of the vehicle body (B).

4. The corner module apparatus for the vehicle of claim 2 or 3, wherein the restriction unit (900) comprises:
a guide hole (910) formed to penetrate the first extension part (620) and the second extension part (630);
a guide pin (920) extended from the leaf spring (500) and inserted into the guide hole (910); and
a pressurization member (930) connected to the guide pin (920) and configured to pressurize the first extension part (620) and the second extension part (630) toward the leaf spring (500) or release the pressurization.

5. The corner module apparatus for the vehicle of claim 4, wherein a width of the guide pin (920), which is parallel to the length direction of the leaf spring (500), is smaller than a width of the guide hole (910), which is parallel to the length direction of the leaf spring (500).

6. The corner module apparatus for the vehicle of claim 4 or 5, wherein a length direction of the guide pin (920) intersects the length direction of the leaf spring (500).

7. The corner module apparatus for the vehicle of any one of claims 4 to 6, wherein the pressurization member (930) comprises:
a first pressurization member (931) connected to one side of the guide pin (920) and disposed to face the first extension part (620); and
a second pressurization member (932) rotatably connected to the other side of the guide pin (920) and disposed to face the second extension part (630), wherein an interval between the second pressurization member (932) and the first pressurization member (931) is adjusted in a rotation direction of the second pressurization member (932).

## Patentansprüche

1. Eckmodulvorrichtung für ein Fahrzeug, umfassend:
eine Antriebseinheit (100), die dazu eingerichtet ist, ein Rad (W) mit Antriebskraft zu versorgen;
einen Achsschenkel (200), der mit der Antriebseinheit (100) verbunden ist;
eine Lenkeinheit (300), die sich zusammen mit dem Achsschenkel (200) dreht und dazu eingerichtet ist, einen Lenkwinkel des Rads (W) einzustellen;
einen ersten Arm (400), der dazu eingerichtet ist, die Lenkeinheit (300) in Bezug auf eine Fahrzeugkarosserie (B) zu stützen;
eine Blattfeder (500), die sich von der Fahrzeugkarosserie (B) erstreckt und so angeordnet ist, dass sie vom Achsschenkel (200) beabstandet ist;
einen zweiten Arm (600), der dazu eingerichtet ist, den Achsschenkel (200) in Bezug auf die Blattfeder (500) zu stützen, sich relativ zur Blattfeder (500) zu bewegen und einen Sturzwinkel des Rads (W) einzustellen; und
eine Beschränkungseinheit (900), die dazu eingerichtet ist, die Relativbewegung des zweiten Arms (600) relativ zur Blattfeder (500) selektiv zu beschränken.

2. Eckmodulvorrichtung für das Fahrzeug nach Anspruch 1, wobei der zweite Arm (600) umfasst:
einen Armkörper (610), der mit dem Achsschenkel (200) verbunden ist;
ein erstes Verlängerungsteil (620) und ein zweites Verlängerungsteil (630), die sich vom Armkörper (610) in eine Richtung parallel zu einer Längsrichtung der Blattfeder (500) erstrecken und so angeordnet sind, dass sie einander zugewandt sind; und
einen Schlitz (640), der zwischen dem ersten Verlängerungsteil (620) und dem zweiten Verlängerungsteil (630) angeordnet ist,
wobei die Blattfeder (500) ein in den Schlitz (640) eingesetztes Ende hat.

3. Eckmodulvorrichtung für das Fahrzeug nach Anspruch 2, wobei die Längsrichtung der Blattfeder (500) parallel zu einer Breitenrichtung der Fahrzeugkarosserie (B) angeordnet ist.

4. Eckmodulvorrichtung für das Fahrzeug nach Anspruch 2 oder 3, wobei die Beschränkungseinheit (900) umfasst:
ein Führungsloch (910), das so ausgebildet ist, dass es das erste Verlängerungsteil (620) und das zweite Verlängerungsteil (630) durchdringt;
einen Führungsstift (920), der sich von der Blattfeder (500) erstreckt und in das Führungsloch (910) eingesetzt ist; und
ein Druckelement (930), das mit dem Führungsstift (920) verbunden ist und dazu eingerichtet ist, das erste Verlängerungsteil (620) und das zweite Verlängerungsteil (630) in Richtung der Blattfeder (500) unter Druck zu setzen oder den Druck zu lösen.

5. Eckmodulvorrichtung für das Fahrzeug nach Anspruch 4, wobei eine Breite des Führungsstifts (920), die parallel zur Längsrichtung der Blattfeder (500) ist, kleiner ist als eine Breite des Führungslochs (910), die parallel zur Längsrichtung der Blattfeder (500) ist.

6. Eckmodulvorrichtung für das Fahrzeug nach Anspruch 4 oder 5, wobei eine Längsrichtung des Führungsstifts (920) die Längsrichtung der Blattfeder (500) schneidet.

7. Eckmodulvorrichtung für das Fahrzeug nach einem der Ansprüche 4 bis 6, wobei das Druckelement (930) umfasst:
ein erstes Druckelement (931), das mit einer Seite des Führungsstifts (920) verbunden ist und so angeordnet ist, dass es dem ersten Verlängerungsteil (620) zugewandt ist; und
ein zweites Druckelement (932), das drehbar mit der anderen Seite des Führungsstifts (920) verbunden ist und so angeordnet ist, dass es dem zweiten Verlängerungsteil (630) zugewandt ist, wobei ein Abstand zwischen dem zweiten Druckelement (932) und dem ersten Druckelement (931) in einer Drehrichtung des zweiten Druckelements (932) eingestellt wird.

## Revendications

1. Appareil de module d'angle pour un véhicule, comprenant:
une unité d'entraînement (100) conçue pour fournir une force motrice à une roue (W);
une fusée d'essieu (200) reliée à l'unité d'entraînement (100);
une unité de direction (300) tournant le long de la fusée d'essieu (200) et conçue pour régler l'angle de braquage de la roue (W);
un premier bras (400) conçu pour supporter l'unité de direction (300) par rapport à la carrosserie (B);
un ressort à lames (500) s'étendant à partir de la carrosserie (B) et disposé de manière à être espacé de la fusée d'essieu (200);
un deuxième bras (600) conçu pour supporter la fusée d'essieu (200) par rapport au ressort à lames (500), pour se déplacer relativement par rapport au ressort à lames (500) et régler l'angle de carrossage de la roue (W); et
une unité de restriction (900) conçue pour restreindre de manière sélective le mouvement relatif du deuxième bras (600) pour le ressort à lames (500).

2. Appareil de module d'angle pour le véhicule selon la revendication 1, dans lequel le deuxième bras (600) comprend:
un corps de bras (610) reliée à la fusée d'essieu (200);
une première partie d'extension (620) et une deuxième partie d'extension (630) s'étendant à partir du corps de bras (610) dans une direction parallèle à la direction longitudinale du ressort à lames (500) et disposées de manière à se faire face; et
une fente (640) pratiquée entre la première partie d'extension (620) et la deuxième partie d'extension (630).
dans lequel le ressort à lames (500) comporte une extrémité insérée dans la fente (640).

3. Appareil de module d'angle pour le véhicule selon la revendication 2, dans lequel la longueur du ressort à lames (500) est parallèle à la largeur de la carrosserie (B).

4. Appareil de module d'angle pour un véhicule selon la revendication 2 ou 3, dans lequel l'unité de restriction (900) comprend:
un trou de guidage (910) pratiqué dans la première partie d'extension (620) et la deuxième partie d'extension (630).
une tige de guidage (920) partant depuis le ressort à lames (500) et insérée dans le trou de guidage (910); et
un élément de mise sous pression (930) relié à la tige de guidage (920) et conçu pour mettre sous pression la première partie d'extension (620) et la deuxième partie d'extension (630) en direction du ressort à lames (500) ou pour relâcher la pression.

5. Appareil de module d'angle pour le véhicule selon la revendication 4, dans lequel la largeur de la tige de guidage (920), qui est parallèle à la direction longitudinale du ressort à lames (500), est inférieure à la largeur du trou de guidage (910), qui est parallèle à la direction longitudinale du ressort à lames (500).

6. Appareil de module d'angle pour le véhicule selon la revendication 4 ou 5, dans lequel la direction longitudinale de la tige de guidage (920) croise la direction longitudinale du ressort à lames (500).

7. Appareil de module d'angle pour le véhicule selon l'une quelconque des revendications 4 à 6, dans lequel l'élément de mise sous pression (930) comprend en outre:
un premier élément de mise sous pression (931) relié à un côté de la tige de guidage (920) et disposé de manière à faire face à la première partie d'extension (620); et
un deuxième élément de mise sous pression (932) relié en rotation à l'autre côté de la tige de guidage (920) et disposé de manière à faire face à la deuxième partie d'extension (630), dans lequel un intervalle entre le deuxième élément de mise sous pression (932) et le premier élément de mise sous pression (931) est ajusté dans un sens de rotation du deuxième élément de mise sous pression (932).
